# EUROPÄISCHE PATENTSCHRIFT

(11) **EP 0 372 339 B1**
(45) Veröffentlichungstag und Bekanntmachung des Hinweises auf die Patenterteilung: **06.10.1993**
(21) Anmeldenummer: 89121825.7
(22) Anmeldetag: 25.11.1989
(51) Int. Cl.: B60N 2/44

(54) **Rückenlehnen-Tragstruktur für einen Fahrzeugsitz und Fahrzeugsitz-Rückenlehne mit dieser Rückenlehnen-Tragstruktur**
Seatback support structure for a vehicle seat, and vehicle seatback having this seatback support structure
Structure de support d'un dossier pour un siège de véhicule et dossier de siège de véhicule, pourvu de cette structure de support de dossier

(30) Priorität: 09.12.1988 DE 3841532
(43) Veröffentlichungstag der Anmeldung: 13.06.1990
(73) Patentinhaber: BAYER AG, 51368 Leverkusen (DE)
(72) Erfinder: Rink, Manfred, D-5000 Köln 60 (DE)

(56) Entgegenhaltungen:
- EP-A- 0 160 927
- EP-A- 0 347 842
- DE-A- 3 044 089
- DE-A- 3 239 292
- FR-A- 2 129 678
- FR-A- 2 214 609

## Beschreibung

Die Erfindung betrifft eine Rückenlehnen-Tragstruktur für einen Fahrzeugsitz, welche aus U-profilartigen Seitenholmen und einem, die oberen Enden der Seitenholme verbindenden Querholm besteht, sowie eine Fahrzeugsitz-Rückenlehne mit dieser Rückenlehnen-Tragstruktur, wie aus DE-A1-3 239 292 bekannt.

Rückenlehnen-Tragstrukturen für Fahrzeugsitze, insbesondere Kfz-Sitze, bestehen in der Regel aus Stahlrohr- oder Blechkonstruktionen. Hierzu müssen komplexe Stanz- und Biegeteile in aufwendigen Verfahren gefertigt, zusammengefügt und gegen Rosten geschützt werden. Sie bedürfen einer zusätzlichen Abdeckung, weil sie als sichtbare Strukturen ansonsten vom Käufer nicht akzeptiert werden. Häufig sind Tragstruktur und Rückenpolster sowie auch der Bezug derart miteinander verbunden, daß ein Austausch eines schadhaften Polsters oder Bezuges allein nur schwer oder gar nicht möglich ist.

Es besteht die Aufgabe, eine Rückenlehnen-Tragstruktur für Fahrzeugsitze, insbesondere Kfz-Sitze, aber auch für Flugzeug- oder Bootsitze zu finden, welche leicht herstellbar ist und die notwendigen Festigkeitseigenschaften aufweist.

Gelöst wird diese Aufgabe dadurch, daß eine Rückenschale kassettenartig von den seitlich nach außen hin offenen U-profilartigen Seitenholmen und dem einseitig offenen U-profilartigen Querholm umgeben ist, wobei Rückenschale, Seitenholme und Querholm aus einem einzigen Spritzgußteil bestehen.

Diese Gestaltung der Rückenlehnen-Tragstruktur erlaubt eine preiswerte Serienfertigung aus geeigneten thermoplastischen oder duroplastischen Kunststoffen, insbesondere aus Polyamid-6, Polyamid-6.6 oder einem Polycarbonat/Acrylnitril-Butadien-Styrol-Copolymer-Blend, jeweils mit einem Glasfasergehalt von etwa 20 bis 40 Gew.-%. Diese Rückenlehnen-Tragstruktur muß selbstverständlich normalen Beanspruchungen standhalten. Auch die Anbindungspunkte für die Gelenkbeschläge müssen entsprechende Festigkeit aufweisen. Um ein Brechen und Splittern der Rückenlehnen-Tragstruktur bei Crashunfällen zu vermeiden, sieht man an anderen Teilen des Sitzes, beispielsweise an den Beschlägen, Sollverformungsstellen vor, welche eher nachgeben als die Rückenlehnen-Tragstruktur. Die Ausbildung der Holme als U-Profile kommt bezüglich der Biege- und Torsionssteifigkeit geschlossenen Hohlprofilen recht nahe. Letztere lassen sich aber nur sehr aufwendig entformen. Für die Fertigung der neuartigen Rückenlehnen-Tragstruktur sind im Formwerkzeug lediglich zwei Seitenschieber erforderlich. Die Rückenschale kann flach sein, sie kann aber auch der Körperform angenähert sein. Die U-profilartigen Seitenholme sowie der Querholm bilden einen steifen Rahmen für die Aufnahme des Sitzpolsters, welches gegen die Rückenschale anliegt. In den offenen Hohlräumen der Seitenholme lassen sich die Anschlußlaschen der Beschläge sowie die Sitzverstellung und gegebenenfalls noch andere Elemente unterbringen. Die Breite der Seitenholme kann über ihre Länge variieren.

Vorzugsweise geht die Rückenschale zu den Seitenholmen hin nach vorn mit einer Abrundung in eine Abwinkelung über, welche, sich verzweigend, über einen Rückschwung in die Mittelstege der Seitenholme und in deren vordere Schenkel ausläuft.

Durch diese kunststoffgerechte Gestaltung werden Kerbrisse vermieden und gute Krafteinleitungen zwischen den Holmen und der Rückenschale gewährleistet.

Gemäß einer besonderen Ausführungsform weist mindestens einer der Holme eine Abdeckung auf.

Diese Abdeckung dient der Optik. Sie kann lösbar und austauschbar sein; sie kann aber auch mit dem Seitenholm zu einem Kastenprofil unlösbar verbunden sein, um die Festigkeit zu erhöhen. Gleiches gilt für die Abdeckung des Querholmes.

Vorzugsweise sind in den Hohlräumen der Holme angeformte Rippen angeordnet.

Diese dienen der Verstärkung und erhöhen insbesondere die Biege- und Torsionssteifigkeit. Sie lassen sich bei entsprechender Gestaltung des Formhohlraumes des Formwerkzeuges unmittelbar mit anspritzen, so daß keine zusätzlichen Arbeiten entstehen.

Eine weitere besondere Ausführungsform ist dadurch gekennzeichnet, daß die vorderen Schenkel der Seitenholme schalenartig nach vorne gewölbt sind.

Diese Gestaltung gibt dem aufzulegenden Rückenpolster eine seitliche Verstärkung, wodurch der Körper des Insassen seitlich besser geführt ist. Auf diese Weise bilden sie zusammen mit der Rückenlehne eine Art Wanne.

Eine weitere besondere Ausführungsform zeigt, daß der Querholm nach vorne offen ist und eine Kopfstützenhalteplatte die Abdeckung bildet.

Diese sogenannte Kopfstützenhalteplatte trägt Rasten für die Verstellbarkeit der Kopfstütze.

Gemäß einer anderen Ausführungsform ist der Querholm nach hinten offen und bildet eine Ablagekammer, welcher als Abdeckung eine Klappe zugeordnet ist.

Je nach Größe dieser Ablagekammer läßt sie sich für Karten, Verbandskasten usw. verwenden. Diese Klappe sollte verletzungssicher gestaltet sein und insbesondere einen versenkten Griff aufweisen.

Vorzugsweise ist die Klappe außenseitig mit einem Schutzpolster versehen.

Dies dient dem Schutz der Fondinsassen bei Crashunfällen.

Die neuartige Rückenlehnen-Tragstruktur bringt außerdem den Vorteil, daß das Rückenpolster ohne Schwierigkeiten austauschbar ist. Ebenso ist es nicht mehr erforderlich, den Bezug unmittelbar auf dem Rückenpolster anzuordnen, sondern er läßt sich bei entsprechender Gestaltung über die Rückenlehne ziehen oder an ihr befestigen. Eine lösbare Befestigung des Bezuges ist ebenfalls möglich, wenn man das Polster mit dem Bezug an der Rückenlehnen-Tragstruktur befestigen kann. Auf diese Weise ist es möglich, die Ausstattung des Fahrzeuges mit einem Rückenpolster geeigneter Härte und einem dem Käufer genehmen Sitzbezug in die Verkaufsagenturen zu verlagern, so daß die Fließbandproduktion rationeller wird. Dafür kann den Wünschen des Käufers in besagter Richtung auch noch im letzten Moment, d.h. vor der Fahrzeugübergabe, nachgekommen werden.

Die neuartige Fahrzeugsitz-Rückenlehne mit einer Rückenlehnen-Tragstruktur der vorbeschriebenen Art ist dadurch gekennzeichnet, daß das vom Rahmen seitlich umgebene Rückenpolster mindestens teilweise die vorderen Schenkel der Seitenholme überdeckt.

Dadurch wird erreicht, daß gerade in diesem Bereich gegenüber dem Mittelteil härter wirkende Seitenführungszonen erzielt werden, ohne daß man Polster mit Zonen von Schaumstoff unterschiedlicher Härte benötigt.

Vorzugsweise überdeckt das Rückenpolster auch die vordere Seite des Querholmes.

Auf diese Weise wird dafür Sorge getragen, daß für Insassen stark abweichender Größe auch diese Partie der Rückenlehnen-Tragstruktur eine Polsterung aufweist, um bei Crashunfällen Verletzungen zu vermeiden.

Gemäß einer weiteren besonderen Ausführungsform überdeckt das Rückenpolster die außenliegende Seite der Seitenholme.

Diese Ausführungsform dient nicht nur der Optik, sondern vermindert auch die Verletzungsgefahr.

In der Zeichnung ist die neue Fahrzeugsitz-Rückenlehne mit der neuartigen Rückenlehnen-Tragstruktur in einem Ausführungsbeispiel rein schematisch dargestellt und nachstehend näher erläutert. Es zeigen:
- Fig. 1: eine Rückenlehnen-Tragstruktur mit vorne offenem Querholm in räumlicher Darstellung mit seitlichem Blick von vorn,
- Fig. 2: eine Rückenlehnen-Tragstruktur mit hinten offenem Querholm in räumlicher Darstellung mit seitlichem Blick von hinten,
- Fig. 3: eine Abdeckung für einen Seitenholm in räumlicher Darstellung,
- Fig. 4: einen Abriß eines Querschnittes durch die Rückenlehnen-Tragstruktur und
- Fig. 5: eine Rückenlehne.

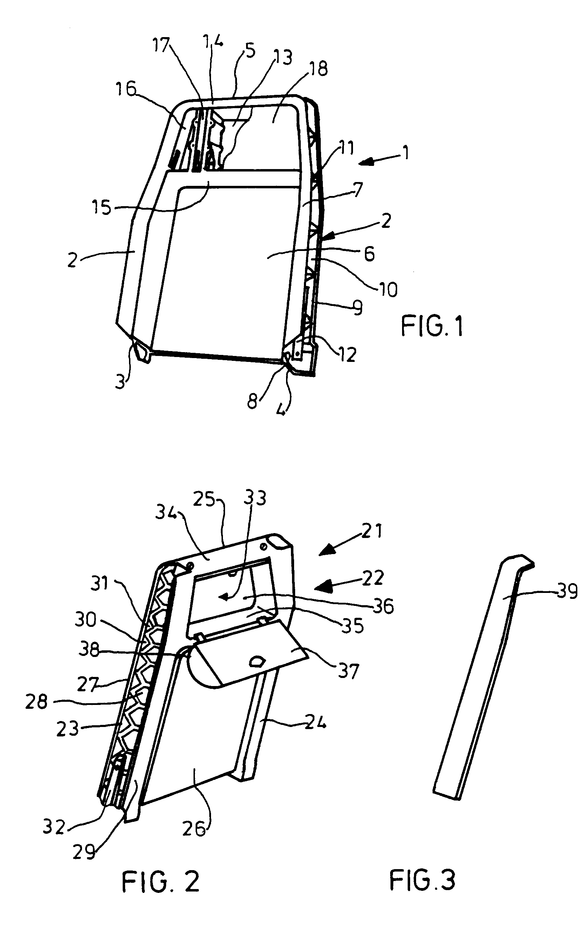

In Fig. 1 besteht die Rückenlehnen-Tragstruktur 1 aus einem Spritzgußformteil aus Polyamid-6 mit 35 Gew.-%. Glasfasergehalt. Ein Rahmen 2 aus Seitenholmen 3, 4 sowie einem Querholm 5 umgibt eine Rückenschale 6. Die Seitenholme 3, 4 besitzen U-förmigen Querschnitt und weisen jeweils einen vorderen Schenkel 7, einen Mittelsteg 8 und einen hinteren Schenkel 9 auf. In dem so gebildeten Hohlraum 10 sind angeformte Rippen 11 angeordnet. Im unteren Bereich der Hohlräume 10 der Seitenholme 3, 4 sind Verstärkungen 12 für den Anschluß der Beschläge und die Neigungsverstellung der Rückenlehne vorgesehen. Der Querholm 5, welcher rückseitig geschlossen ist und auf diese Weise einen U-förmigen Querschnitt mit einem breiten Mittelsteg 13, einem oberen Schenkel 14 und einem unteren Schenkel 15 aufweist, verbindet die oberen Enden der Seitenholme 3, 4. In dem gebildeten Hohlraum 16 befinden sich auch noch angeformte Führungen 17 für eine Kopfstütze. Dieser Hohlraum 16 ist durch eine im Abriß dargestellte Abdeckung 18 verschlossen, welche als sogenannte Kopfstützenhalteplatte mit einer nicht dargestellten, in den Hohlraum 16 weisenden Raste für die Kopfstütze ausgestattet ist. Diese Kopfstützenhalteplatte 18 ist derart geformt, daß sie paßgenau zwischen den Schenkeln 14, 15 liegt und somit zur Versteifung beiträgt.

In Fig. 2 besteht die Rückenlehnen-Tragstruktur 21 aus einem Spritzgußformteil aus Polycarbonat/Acrylnitril-Butadien-Styrol-Copolymer mit 30 Gew.-% Glasfasergehalt. Ein Rahmen 22 aus Seitenholmen 23, 24 sowie einem Querholm 25 umgibt eine Rückenschale 26. Die Seitenholme 23, 24 besitzen U-förmigen Querschnitt und weisen jeweils einen vorderen Schenkel 27, einen Mittelsteg 28 und einen hinteren Schenkel 29 auf. In dem gebildeten Hohlraum 30 sind angeformte Rippen 31 angeordnet. Im unteren Bereich der Hohlräume 30 sind Verstärkungen 32 für den Anschluß der Beschläge und die Neigungsverstellung der Rückenlehne vorgesehen. Der Querholm 25 ist vorderseitig geschlossen und bildet auf diese Weise einen U-förmigen Querschnitt mit einem breiten Mittelsteg 33, einem oberen Schenkel 34 und einem unteren Schenkel 35. Der so gebildete Hohlraum 36 dient als Ablagekammer und ist mit einer als Klappe gestalteten Abdeckung 37 versehen. Diese Klappe 37 ist außenseitig mit einem Schutzpolster 38 zum Schutz der Fondinsassen bei Crashunfällen ausgestattet.

Fig. 3 zeigt eine Abdeckung 39 für den linken Seitenholm 23 gemäß Fig. 2, welche mit nicht dargestellten Schnappverbindungen in den Seitenholm 23 einrastet.

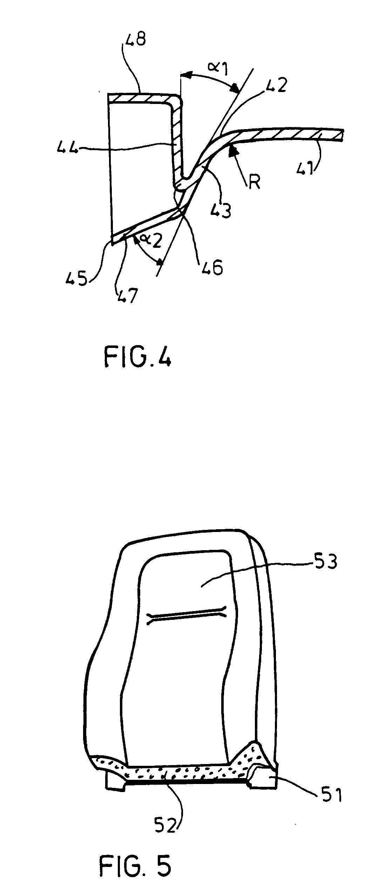

In Fig. 4 geht die Rückenschale 41 über eine Abrundung 42 vom Radius R = 50 mm in eine Abwinkelung 43 über, welche mit dem Mittelsteg 44 des Seitenholmes 45 einen Winkel α₁ von 45° bildet. Diese Abwinkelung 43 verzweigt sich und geht einerseits über einen Rückschwung 46 in den Mittelsteg 44 über und knickt andererseits mit einem Winkel α₂ van 15° ab, um in den vorderen Schenkel 47 auszulaufen. Der hintere Schenkel ist mit 48 bezeichnet.

In Fig. 5 sind auf der Rückenlehnen-Tragstruktur 51 bereits ein Rückenpolster 52 und ein Bezug 53 angeordnet.

## Patentansprüche

1. Rückenlehnen-Tragstruktur (1; 21; 51) für einen Fahrzeugsitz, welche aus U-profilartigen Seitenholmen (3, 4; 23, 24; 45) und einem die oberen Enden der Seitenholme (3, 4; 23; 24; 45) verbindenden Querholm (5; 25) besteht, dadurch gekennzeichnet, daß eine Rückenschale (6; 26; 41) kassettenartig von den seitlich nach außen hin offenen U-profilartigen Seitenholmen (3, 4; 23, 24; 45) und dem einseitig offenen U-profilartigen Querholm (5; 25) umgeben ist, wobei Rückenschale (6; 26; 41), Seitenholme (3, 4; 23, 24; 45) und Querholm (5, 25) aus einem einzigen Spritzgußteil bestehen.

2. Rückenlehnen-Tragstruktur nach Anspruch 1, dadurch gekennzeichnet, daß die Rückenschale (41) zu den Seitenholmen (45) hin nach vorn mit einer Abrundung (42) in eine Abwinkelung (43) übergeht, welche, sich verzweigend, über einen Rückschwung (46) in die Mittelstege (44) der Seitenholme (45) und in deren vordere Schenkel (47) ausläuft.

3. Rückenlehnen-Tragstruktur nach Anspruch 1 oder 2, dadurch gekennzeichnet, daß mindestens einer der Holme (23) eine Abdeckung (39) aufweist.

4. Rückenlehnen-Tragstruktur nach einem der Ansprüche 1 bis 3, dadurch gekennzeichnet, daß in den Hohlräumen (10) der Holme (3, 4; 23, 24) angeformte Rippen (11; 31) angeordnet sind.

5. Rückenlehnen-Tragstruktur nach einem der Ansprüche 1 bis 4, dadurch gekennzeichnet, daß die vorderen Schenkel (7; 27; 47) der Seitenholme (3, 4; 23, 24; 45) schalenartig nach vorne gewölbt sind.

6. Rückenlehnen-Tragstruktur nach einem der Ansprüche 1 bis 5, dadurch gekennzeichnet, daß der Querholm (5) nach vorne offen ist und eine Kopfstützenhalteplatte die Abdeckung (18) bildet.

7. Rückenlehnen-Tragstruktur nach einem der Ansprüche 1 bis 5, dadurch gekennzeichnet, daß der Querholm (25) nach hinten offen ist und eine Ablagekammer (30) bildet, welcher als Abdeckung (37) eine Klappe zugeordnet ist.

8. Rückenlehnen-Tragstruktur nach Anspruch 7, dadurch gekennzeichnet, daß die Klappe (37) außenseitig mit einem Schutzpolster (38) versehen ist.

9. Fahrzeugsitz-Rückenlehne mit einer Rückenlehnen-Tragstruktur (1; 21; 51) nach einem der Ansprüche 1 bis 8, dadurch gekennzeichnet, daß das vom Rahmen seitlich umgebene Rückenpolster (52) mindestens teilweise die vorderen Schenkel der Seitenholme überdeckt.

10. Fahrzeugsitzrückenlehne nach Anspruch 9, dadurch gekennzeichnet, daß das Rückenpolster (52) auch die vordere Seite des Querholmes überdeckt.

11. Fahrzeugsitz-Rückenlehne nach den Ansprüchen 9 und 10, dadurch gekennzeichnet, daß das Rückenpolster (52) die außenliegende Seite der Seitenholme überdeckt.

## Claims

1. A backrest support structure (1; 21; 51) for a vehicle seat, which backrest support structure comprises U-profile-like side bars (3, 4; 23, 24; 45) and a crossbar (5; 25) connecting the upper ends of the side bars (3, 4; 23, 24; 45), characterised in that a back shell (6; 26; 41) is enclosed in the manner of a cassette by the laterally outwardly open U-profile-like side bars (3, 4; 23, 24; 45) and the U-profile-like crossbar (5; 25) which is open on one side, the back shell (6; 26; 41), side bars (3, 4; 23, 24; 45) and crossbar (5; 25) being formed by a single injection moulded part.

2. A backrest support structure according to claim 1, characterised in that the back shell (41) extends forwards towards the side bars (45) via a curved section (42) into an angled section (43), which, branching, extends via a reversed section (46) into the central webs (44) of the side bars (45) and into the front limbs (47) thereof.

3. A backrest support structure according to claim 1 or 2, characterised in that at least one of the bars (23) comprises a cover (39).

4. A backrest support structure according to one of claims 1 to 3, characterised in that formed-on ribs (11; 31) are arranged in the cavities (10) of the bars (3, 4; 23, 24).

5. A backrest support structure according to one of claims 1 to 4, characterised in that the front limbs (7; 27; 47) of the side bars (3, 4; 23, 24; 45) curve forwards in a shell-like manner.

6. A backrest support structure according to one of claims 1 to 5, characterised in that the crossbar (5) is open towards the front and a head support holding plate forms the cover (18).

7. A backrest support structure according to one of claims 1 to 5, characterised in that the crossbar (25) is open towards the back and forms a depositing chamber (30), with which a flap is associated as a cover (37).

8. A backrest support structure according to claim 7, characterised in that the flap (37) is provided on its outside with a protective cushion (38).

9. A vehicle seat backrest with a backrest support structure (1; 21; 51) according to one of claims 1 to 8, characterised in that the back cushion (52) laterally enclosed by the frame at least partially covers the front limbs of the side bars.

10. A vehicle seat backrest according to claim 9, characterised in that the back cushion (52) also covers the front side of the crossbar.

11. A vehicle seat backrest according to claims 9 and 10, characterised in that the back cushion (52) covers the outwardly facing side of the side bars.

## Revendications

1. Structure de support de dossier (1; 21; 51) pour un siège de véhicule comprenant des montants latéraux (3, 4, 23, 24; 45) profilés en U et une barre transversale (5; 25) reliant les extrémités supérieures des montants latéraux (3, 4; 23, 24; 45), caractérisée en ce que une coque de dossier (6; 26; 41) est entourée en forme de cassette par les montants latéraux (3, 4; 23, 24; 45) profilés en U et ouverts vers l'extérieur sur le côté et par la barre transversale (5; 25) profilée en U et ouverte d'un côté, la coque de dossier (6; 26; 41), les montants latéraux (3, 4; 23, 24; 45) et la barre transversale (5, 25) étant constitués d'une seule pièce injectée.

2. Structure de support de dossier selon la revendication 1, caractérisée en ce que, du côté des montants latéraux (45) vers l'avant, la coque de dossier (41) fait d'abord un arrondi (42) puis un angle (43) qui se ramifie, se prolonge par une ligne courbe en arrière (46), arrive dans les barres centrales (44) des montants latéraux (45) et se termine dans leurs côtés avant (47).

3. Structure de support de dossier selon la revendication 1 ou 2, caractérisée en ce que au moins l'un des montants (23) présente un recouvrement (39).

4. Structure de support de dossier selon l'une des revendications 1 à 3, caractérisée en ce que des nervures venues de moulage (11; 31) sont disposées dans les cavités (10) des montants (3, 4; 23, 24).

5. Structure de support de dossier selon l'une des revendications 1 à 4, caractérisée par le fait que les côtés avant (7; 27; 47) des montants latéraux (3, 4; 23, 24; 45) sont bombées vers l'avant à la façon d'une coque.

6. Structure de support de dossier selon l'une des revendications 1 à 5, caractérisée en ce que la barre transversale (5) est ouverte vers l'avant et qu'une plaque-support d'appui-tête constitue le recouvrement (18).

7. Structure de support de dossier selon l'une des revendications 1 à 5, caractérisée en ce que la barre transversale (25) est ouverte vers l'arrière et constitue un espace vide-poches (30) auquel est affecté un abattant en guise de revêtement (37).

8. Structure de support de dossier selon la revendication 7, caractérisée en ce que l'abattant (37) est pourvu à l'extérieur d'un capitonnage de protection (38).

9. Dossier de siège de véhicule avec une structure de support de dossier (1; 21; 51) selon l'une des revendications 1 à 8, caractérisé en ce que le capitonnage de dossier (52) entouré latéralement par le cadre recouvre au moins en partie les côtés avant des montants latéraux.

10. Dossier de siège de véhicule selon la revendication 9, caractérisé en ce que le capitonnage de dossier (52) recouvre également le côté avant de la barre transversale.

11. Dossier de siège de véhicule selon les revendications 9 et 10, caractérisé en ce que le capitonnage de dossier (52) recouvre le côté extérieur des montants latéraux.
